# Europäisches Patentamt
## European Patent Office
## Office européen des brevets

(19)

(11) Veröffentlichungsnummer: **0 168 567**
**B1**

(12)

# EUROPÄISCHE PATENTSCHRIFT

(45) Veröffentlichungstag der Patentschrift:
**13.07.88**

(51) Int. Cl.⁴: **F 02 B 29/04**

(21) Anmeldenummer: **85105320.7**

(22) Anmeldetag: **02.05.85**

(54) **Verfahren und Einrichtung zum Kühlen der Ladeluft einer aufgeladenen Brennkraftmaschine.**

(30) Priorität: **18.07.84 CH 3489/84**

(43) Veröffentlichungstag der Anmeldung:
**22.01.86 Patentblatt 86/4**

(45) Bekanntmachung des Hinweises auf die Patenterteilung:
**13.07.88 Patentblatt 88/28**

(84) Benannte Vertragsstaaten:
**CH DE FR GB LI SE**

(56) Entgegenhaltungen:
**DE - B - 1 212 778**
**DE - C - 748 857**
**FR - A - 2 191 609**
**GB - A - 780 246**

**Automobil-Industrie 1/77, B. Kirchhofer "Aufladung von Fahrzeugdieselmotoren mit Compress".**

(73) Patentinhaber: **BBC Brown Boveri AG, Haselstrasse, CH-5401 Baden (CH)**

(72) Erfinder: **Keller, Jakob, Dr., Zelgmattstrasse 4, CH-8956 Killwangen (CH)**

EP 0 168 567 B1

## Beschreibung

Die Erfindung betrifft ein Verfahren zum Kühlen der Ladeluft einer aufgeladenen Brennkraftmaschine, wobei ein Teil der vom Lader geförderten Ladeluft abgezweigt wird, hierauf in einem berohrten Wärmeaustauscher Wärme von der die Rohre umströmenden Ladeluft aufnimmt, und anschliessend an die Umgebung abgeführt wird; sie betrifft ebenfalls einen Ladeluftkühler zur Durchführung des Verfahrens.

Ein derartiges Verfahren ist aus der FR-A-2 191 609 bekannt. Der dortige Wärmetauscher ist kühllufteintrittsseitig mit einem doppelkegeligen Einlauf versehen. An der engsten Stelle des Doppelkegels wird die abgezweigte, verdichtete Luft eingeblasen. Mit dieser Massnahme soll der Anteil an angesaugter Frischluft beträchtlich erhöht werden.

Bei der Verwendung von Turboladern oder andern Aufladegeräten, beispielsweise gasdynamischen Druckwellenmaschinen zur Verdichtung der einem Motor zugeführten Luft darf in der Regel ein bestimmter maximaler Ladedruck nicht überschritten werden. Um eine solche Drucküberschreitung zu vermeiden, wird oft ein sogenanntes «Waste Gate» verwendet. Hierbei handelt es sich um ein Ventil, durch welches Hochdruck-Abgas abgeblasen wird, sobald der maximal zulässige Ladedruck erreicht wird. Bei der Druckwellenmaschine, zu dessen Funktionsweise auf die Schweizerische Patentschrift 378 595 oder auf die Druckschrift CH-T 123 143 der Anmelderin verwiesen wird, ist die Verwendung eines Waste-Gates nicht ganz unproblematisch. Wenn nämlich zu viel Abgas abgeblasen wird, reicht das dem Lader noch zugeführte Abgas nicht mehr aus, um eine vollständige Spülung im Niederdruckspülkreis zu gewährleisten. In diesem Fall wird ein Teil des Abgases erneut verdichtet, und davon gelangt wieder ein Teil in den Ladeluftkanal. Dies hat zur Folge, dass die Ladelufttemperatur unerwünscht hoch ist und dass die Schluckfähigkeit des Motors im oberen Drehzahlbereich beeinträchtigt wird.

Hier will die Erfindung Abhilfe schaffen. Die Erfindung, wie sie in den Ansprüchen gekennzeichnet ist, löst sowohl das Problem des rezirkulierenden Abgases als auch das Problem der zu hohen Ladelufttemperatur.

Der besondere Vorteil der Erfindung ist darin zu sehen, dass auf das übliche Abblaseventil verzichtet werden kann.

In der Zeichnung sind zwei Ausführungsbeispiele des Erfindungsgegenstandes schematisch dargestellt. Erfindungsunwesentliche Elemente wie beispielsweise die Brennkraftmaschine selbst und das Ladegerät sind fortgelassen. Die Strömungsrichtung der Medien ist mit Pfeilen bezeichnet.

Es zeigt:

Fig. 1 eine erste Ausführungsform der Erfindung,

Fig. 2 eine insbesondere für die Anwendung bei gasdynamischen Druckwellenmaschinen geeignete Abwandlung.

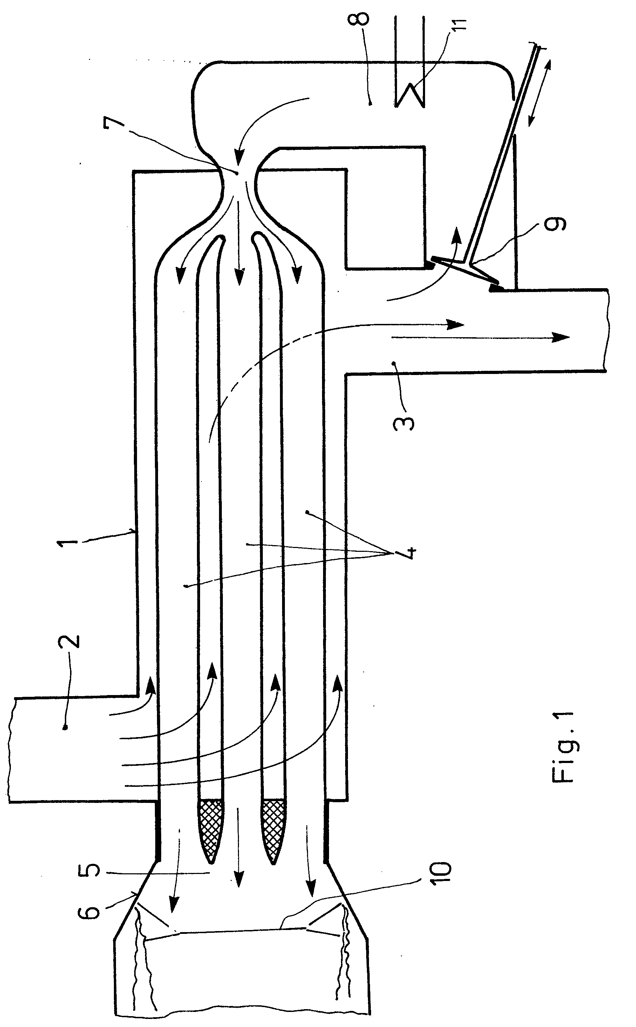

Bei der Variante nach Fig. 1 ist das Gehäuse 1 des Ladeluftkühlers mit einem Eintrittstutzen 2 und einem Austrittstutzen 3 für die Ladeluft versehen. Im Gehäuseinnern ist eine Anzahl Rohre 4 angeordnet, die innen von der Kühlluft durchströmt sind und die aussen von der Ladeluft umströmt sind. Vorzugsweise ist das Gegenstromprinzip gewählt, wobei es sich versteht, dass auch andere Strömungsformen möglich sind. Die Rohre 4 münden ausstrittsseitig in eine gemeinsame Kammer 5, welche an einer der Gehäusestirnseiten angeordnet ist. Die Befestigung der Rohre, beispielsweise in einem Rohrboden, ist nicht gezeigt; hingegen ist die strömungskonforme Ausbildung der Rohrenden schematisch dargestellt. Die Kammer 5 geht stromabwärts in eine abrupte Querschnittserweiterung 6 über, deren Funktion später erläutert wird.

Eintrittsseitig sind die Rohre mit einer Lavaldüse 7 verbunden. Hierzu ist die Eintrittspartie an den Rohrenden entsprechend gestaltet. Der durchströmte Querschnitt aller Rohre ist so bemessen, dass in den Rohren die Überschallgeschwindigkeit aufrechterhalten bleibt. Stromaufwärts der Lavaldüse ist eine Abzweigleitung 8, das sogenannte «Waste-Gate» angeordnet, welche im vorliegenden Fall vom Austrittsstutzen 3 abzweigt. Selbstverständlich könnte das Waste-Gate genausogut vom Eintrittsstutzen 2 abzweigen. Schematisch dargestellt ist das – in der Regel mediengesteuerte – Absperrorgan 9.

Während des Motorbetriebs geschieht nun folgendes: Sobald die Ladeluft den vom Motor vorgegebenen zulässigen Maximaldruck erreicht, öffnet das über einen (nicht dargestellten) Druckregler betätigte Absperrorgan 9 und ein Teil der Ladeluft strömt nunmehr als Kühlluft in die Abzweigleitung 8 ein. In der Lavaldüse wird diese Luft auf hohe Überschallgeschwindigkeit beschleunigt und gleichzeitig auf einen Druck, der wesentlich tiefer ist als Atmosphärendruck, expandiert. Dabei kühlt sich die expandierende Luft sehr stark ab. Diese nunmehr sehr kalte Luft, die mit Überschallgeschwindigkeit strömt, wird den einzelnen Wärmetauscherrohren zugeführt. Die kalte entspannte Luft nimmt in diesen Rohren Wärme auf, welche von der die Rohre umgebenden Ladeluft an die kalten Rohrwände abgegeben wurde. Sobald die entspannte Abluft die Wärmetauscherrohre durchquert hat, gelangt sie über die Kammer 5 in die Querschnittserweiterung 6, in welcher sie von einer Stosswelle 10 auf mindestens Atmosphärendruck verdichtet und anschliessend dem nicht dargestellten Auspuff zugeführt wird.

Anhand eines Zahlenbeispiels sei die Wirkungsweise der Erfindung erläutert. Es versteht sich, dass die genannten Zahlen nur Approximativwerte sein können, da allzu zahlreiche Parameter sowohl die Konfiguration des Kühlers als auch dessen Betriebsweise beeinflussen.

Beträgt der Druck der verdichteten Luft nach dem Ladeluftkühler ca. 2 bar und ihre Temperatur 80 °C, dann kann die abgezweigte Kühlluft von der Lavaldüse problemlos auf doppelte Schallgeschwindigkeit beschleunigt werden. Die Lufttemperatur beträgt dann am Eintritt der Wärmetauscherrohre ca. –75 °C. In diesem Fall reicht die Stärke der Stosswelle nach den Wärmetauscherrohren aus, um die Abluft wieder auf mehr als 1 bar zu verdichten und durch das Auspuffsystem auszustossen. Bei laminaren Grenzschichten beträgt die Recovery-Temperatur am Anfang der Wärmetauscherrohre ca. 55 °C. Man darf demnach einen Kühleffekt in der Grössenordnung von 10–20 °C erwarten.

Selbstverständlich ist die Erfindung nicht auf das zur ersten Variante Beschriebene beschränkt. So könnte mit Vorteil in der Abzweigleitung eine Kühlschlange 11 angeordnet sein, in der die abgezweigte Kühlluft vor ihrer Beschleunigung in der Lavaldüse vorgekühlt wird. Die in dieser Kühlschlange abgegebene Wärme könnte an die Umgebung abgeführt oder sonstigen Zwecken zugeführt werden. Der für die Ladeluft erzielbare Effekt könnte aufgrund dieser Massnahme nochmals beträchtlich verbessert werden. In diesem Fall sind hohe Machzahlen in den Wärmetauscherrohren auch deshalb von Vorteil, weil bei hoher Machzahl besonders viel Wärme pro Flächeneinheit übertragen wird.

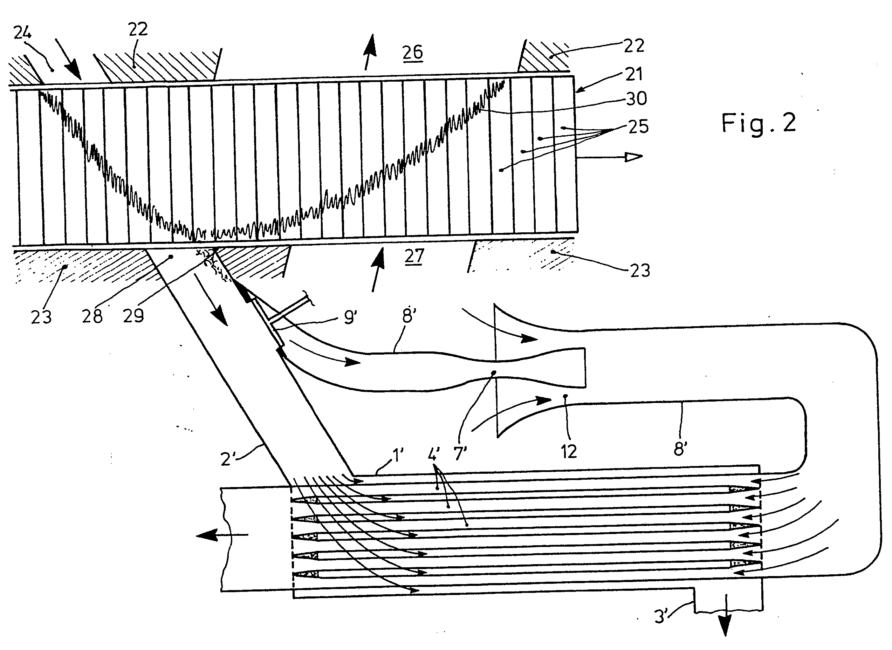

In Fig. 2 ist eine Variante gezeigt, die vorzüglich zur Lösung des Rezirkulationsproblemes bei gasdynamischen Druckwellenmaschinen geeignet ist.

Der grundsätzliche Aufbau einer solchen Druckwellenmaschine und deren genaue Struktur kann der bereits genannten Druckschrift CH-T 123 143 entnommen werden. In der Figur ist sie als Abwicklung eines Zylinderschnittes in halber Höhe der Zellen durch den Rotor und durch die daran anschliessenden Partien der Seitenteile des Gehäuses gezeigt. Der Einfachheit halber ist sie als Einzyklus-Maschine dargestellt, was sich dadurch ausdrückt, dass das Gasgehäuse 22 und das Luftgehäuse 23 an ihren dem Rotor 21 zugekehrten Seiten mit nur je einer Hochdruck- und einer Niederdrucköffnung versehen sind. Um die Funktion des Systems übersichtlicher zu erläutern, sind die Strömungsrichtungen der Arbeitsmedien und die Drehrichtung der Druckwellenmaschine mit Pfeilen bezeichnet.

Die heissen Abgase des nicht gezeigten Verbrennungsmotors treten durch den Hochdruckgas-Zuströmkanal 24 in den mit axialgeraden, beidseitig offenen Zellen 25 versehenen Rotor 21 ein, expandieren darin und verlassen ihn über den Niederdruckgas-Abströmkanal 26 in den nicht gezeigten Auspuff. Auf der Luftseite wird atmosphärische Frischluft angesaugt, strömt über den Niederdruckluft-Eintrittskanal 27 axial in den Rotor 21 ein, wird darin verdichtet und verlässt ihn als Ladeluft über den Hochdruckluft-Austrittskanal 28 über den Ladeluftkühler zum Motor hin.

Zum Verständnis des eigentlichen, äusserst komplexen gasdynamischen Druckwellenprozesses, welcher nicht Erfindungsgegenstand ist, wird auf die schon genannte Druckschrift CH-T 123 143 verwiesen. Der für das Verständnis der Erfindung notwendige Prozessablauf wird nachstehend kurz erläutert: Das aus den Zellen 25 bestehende Zellenband ist die Abwicklung eines Zylinderschnittes des Rotors 21, welche sich bei Drehung des letzteren in Pfeilrichtung nach rechts bewegt. Die Druckwellenvorgänge laufen im Innern des Rotors 21 ab und bewirken im wesentlichen, dass sich ein gasgefüllter Raum und ein luftgefüllter Raum bilden. Im ersteren entspannt sich das Abgas und entweicht dann in den Niederdruckgas-Abströmkanal 26, während im zweiten ein Teil der angesaugten Frischluft verdichtet und in den Hochdruckluft-Austrittskanal 28 ausgeschoben wird. Der verbleibende Frischluftanteil wird durch den Rotor in den Niederdruckgas-Abströmkanal 26 überspült und bewirkt damit den vollständigen Austritt der Abgase. Diese Spülung ist für den Prozessablauf wesentlich und muss unter allen Umständen aufrechterhalten bleiben. Es soll auf jeden Fall vermieden werden, dass Abgas im Rotor 21 verbleibt und bei einem nachfolgenden Zyklus mit der Ladeluft dem Motor zugeführt wird.

Je nach Maschinenauslegung und Betriebsbedingungen kann indessen das Rezirkulieren einer bestimmten Abgasmenge stattfinden, aus Umweltschutzgründen sogar erwünscht sein. Dies wird dadurch erreicht, dass ein gewisser Gasanteil auf die Luftseite hinübertritt und im Bereich der Schliesskante 29 in den Hochdruck-Austrittskanal 28 überspült wird. Dieser Sachverhalt ist in der Prinzipskizze durch die Trennfront 30 zwischen Luft und Gas dargestellt. Diese Trennfront ist nicht eine scharfe Begrenzung, sondern vielmehr eine relativ breite Mischzone.

Die solchermassen mit Abgas stark verunreinigte Ladeluft würde eine unerwünschte Erhöhung der Ladelufttemperatur bewirken mit der Folge, dass die Schluckfähigkeit des Verbrennungsmotors im oberen Drehzahlbereich beeinträchtigt werden könnte.

Betreffend des von der Ladeluft beaufschlagten Kühlers sind in Fig. 2 die gleichen Elemente wie in Fig. 1 mit denselben Bezugszeichen zuzüglich eines (') bezeichnet.

Die Abzweigleitung 8' wird vorzugsweise so angeordnet, dass zum Grossteil Ladeluft mit starkem Abgasanteil zu Kühlzwecken entnommen wird. Hierzu zweigt sie vom Eintrittsstutzen 2' – als solcher ist der Einfachheit halber die von der Druckwellenmaschine zum Ladeluftkühler führende Leitung bezeichnet – an jener Seite ab, an der sich die Schliesskante 29 befindet.

Nach der Abblasung durch das druckgesteuerte Absperrorgan 9' wird die heisse Luft in der nachfolgenden Lavaldüse 7' auf Überschallgeschwindigkeit beschleunigt. Zur Dimensionierung der Abblasleitung 9' ist zu beachten, dass die Erweiterung nach der Lavaldüse 9' so bemessen ist, dass der statische Druck den Umgebungsdruck deutlich unterschreitet. Mit der beschleunigten Luft wird nun durch eine Strahlpumpe 12 Umgebungsluft angesaugt und beschleunigt. Das anfallende, vergleichsweise kalte Gemisch durchströmt die dünnen Rohre 4′ des Wärmeaustauschers, in denen es Wärme von der im Gegenstrom um die Rohre 4′ geführten Motor-Verbrennungsluft aufnimmt. Über den nicht gezeigten Auspuff wird das Gemisch in die Atmosphäre verworfen.

## Patentansprüche

1. Verfahren zum Kühlen der Ladeluft einer aufgeladenen Brennkraftmaschine, wobei ein Teil der vom Lader geförderten Ladeluft abgezweigt wird, hierauf in einem berohrten Wärmeaustauscher Wärme von der die Rohre umströmenden Ladeluft aufnimmt, und anschliessend an die Umgebung abgeführt wird, dadurch gekennzeichnet, dass die abgezweigte Ladeluft in einer Lavaldüse auf Überschallgeschwindigkeit beschleunigt wird.

2. Verfahren nach Anspruch 1, dadurch gekennzeichnet, dass die Kühlluft stromabwärts der erfolgten Ladeluftkühlung abgezweigt wird.

3. Verfahren nach Anspruch 1, dadurch gekennzeichnet, dass die abgezweigte Kühlluft zunächst vorgekühlt wird, bevor sie beschleunigt wird.

4. Verfahren nach Anspruch 1, dadurch gekennzeichnet, dass die mit Überschallgeschwindigkeit strömende Kühlluft nach der Wärmeaufnahme von einer Stosswelle auf Umgebungsdruck verdichtet wird.

5. Verfahren nach Anspruch 1, dadurch gekennzeichnet, dass mit der beschleunigten Luft nach dem Prinzip einer Strahlpumpe Umgebungsluft angesaugt wird, und das sich bildende Gemisch den Wärmeaustauscher durchströmt.

6. Ladeluftkühler zur Durchführung des Verfahrens nach Anspruch 1, mit einer Mehrzahl Rohre (4), die in einem mit einem Ein- und Austrittsstutzen (2 resp. 3) für die Ladeluft versehenen Gehäuse (1) angeordnet sind, wobei die Rohre (4) von der Kühlluft durchströmt und von der Ladeluft, vorzugsweise im Gegenstrom, umströmt sind, dadurch gekennzeichnet, dass die Rohre (4) eintrittsseitig mit einer in einer Abzweigleitung der Ladeluft (8) angeordneten Lavaldüse (7) verbunden sind und austrittsseitig in eine Querschnittserweiterung (6) münden, welche an ein Auspuffsystem angeschlossen ist.

7. Ladeluftkühler zur Durchführung des Verfahrens nach Anspruch 5, mit einer Mehrzahl Rohre (4′), die in einem mit einem Ein- und Austrittsstutzen (2′ resp. 3′) für die Ladeluft versehenen Gehäuse (1′) angeordnet sind, wobei die Rohre (4′) von der Kühlluft durchströmt und von der Ladeluft, vorzugsweise im Gegenstrom umströmt sind, dadurch gekennzeichnet, dass in einer vom Eintrittsstutzen (2′) zum Rohreintritt führenden Abzweigleitung (8′) eine Lavaldüse (7′) mit stromabwärts anschliessender Strahlpumpe (12) angeordnet ist.

8. Ladeluftkühler nach Anspruch 7, dadurch gekennzeichnet, dass die Abzweigleitung (8′) an jener Seite des Eintrittsstutzens (2′) angeordnet ist, an der sich die Schliesskante (29) des Hochdruckluft-Austrittskanals (28) einer gasdynamischen Druckwellenmaschine befindet.

## Revendications

1. Procédé pour refroidir l'air de suralimentation d'un moteur à combustion interne suralimenté, dans lequel une partie de l'air de suralimentation fourni par le compresseur est dérivé de sa trajectoire, prélève ensuite de la chaleur de l'air de suralimentation circulant autour des tubes dans un échangeur de chaleur à tubes et est enfin rejeté à l'atmosphère, caractérisé en ce que l'air de suralimenation dérivé est accéléré jusqu'à une vitesse supersonique dans une tuyère de laval.

2. Procédé suivant la revendication 1, caractérisé en ce que l'air de refroidissement est dérivé en aval par rapport à l'endroit où a eu lieu le refroidissement de l'air de suralimentation.

3. Procédé suivant la revendication 1, caractérisé en ce que l'air de refroidissement dérivé est d'abord prérefroidi avant d'être accéléré.

4. Procédé suivant la revendication 1, caractérisé en ce que l'air de refroidissement circulant avec une vitesse supersonique est comprimé jusqu'à la pression atmosphérique par une onde de choc, après le prélèvement de chaleur.

5. Procédé suivant la revendication 1, caractérisé en ce que de l'air atmosphérique est aspiré avec l'air accéléré, suivant le principe de la pompe à entraînement, et en ce que le mélange qui se forme circule à travers l'échangeur de chaleur.

6. Refroidisseur d'air de suralimentation pour la mise en œuvre du procédé suivant la revendication 1, avec une pluralité de tubes (4) qui sont disposés dans un corps (1) pourvu d'une tubulure d'entrée et d'une tubulure de sortie (2 respectivement 3) pour l'air de suralimentation dans lequel les tubes (4) sont parcourus par l'air de refroidissement et où l'air de suralimentation circule autour de ces tubes, de préférence à contre-courant, caractérisé en ce que les tubes (4) sont raccordés du côté de l'entrée à une tuyère de laval (7) disposée dans une conduite de dérivation (8) de l'air de suralimentation et débouchent du côté de la sortie dans une augmentation de section (6) qui est reliée à un circuit d'échappement.

7. Refroidisseur d'air de suralimentation pour la mise en œuvre du procédé suivant la revendication 5, avec une pluralité de tubes (4′) qui sont disposés dans un corps (1′) pourvu d'une tubulure d'entrée et d'une tubulure de sortie (2′ respectivement 3′) pour l'air de suralimentation, dans lequel les tubes (4′) sont parcourus par l'air de refroidissement et où l'air de suralimentation circule autour de ces tubes, de préférence à contre-courant, caractérisé en ce qu'une tuyère de laval (7′) raccordée vers l'aval à une pompe à entraînement (12) est disposée dans une conduite de dérivation (8′) menant de la tubulure d'entrée (2′) à l'entrée des tubes.

8. Refroidisseur d'air de suralimentation suivant la revendication 7, caractérisé en ce que la conduite de dérivation (8′) est disposée du côté de la tubulure d'entrée (2′) où se trouve l'arête de fermeture (29) du canal de sortie (28) de l'air à haute pression d'une machine gazodynamique à ondes de pression.

## Claims

1. Method for cooling the charging air of a supercharged internal combustion engine, a part of the charging air delivered by the charger being branched off, thereupon taking up heat in a tubular heat exchanger from the charging air flowing around the tubes, and being discharged thereafter into the surroundings, characterized in that the branched-off charging air is accelerated to supersonic velocity in a laval nozzle.

2. Method according to Claim 1, characterized in that the cooling air is branched off downstream of the charging air cooling occurring.

3. Method according to Claim 1, characterised in that the branched-off cooling air is first precooled, before it is accelerated.

4. Method according to Claim 1, characterised in that the cooling air flowing at supersonic velocity is compressed by a shock wave to the surrounding pressure after the take-up of heat.

5. Method according to Claim 1, characterised in that surrounding air is sucked in with the accelerated air according to the principle of a jet pump, and the resultant mixture flows through the heat exchanger.

6. Charging air cooler for performing the method according to Claim 1, with a plurality of tubes (4), which are arranged in a housing (1) provided with inlet and outlet connections (2, 3 respectively) for the charging air, the cooling air flowing through the tubes (4) and the charging air, flowing around the tubes, preferably in countercurrent, characterised in that the tubes (4) are connected on the inlet side to a laval nozzle (7) arranged in a branch passage (8), of the charging air, and on the outlet side they open into a cross-sectional enlargement (6), which is connected to an exhaust system.

7. Charging air cooler for performing the method according to Claim 5, with a plurality of tubes (4'), which are arranged in a housing (1') provided with inlet and outlet connections (2', 3' respectively) for the charging air, the cooling air flowing through the tubes (4') and round the charging air flowing around the tubes, preferably in countercurrent, characterised in that in a branch passage (8') leading from the inlet connection (2') to the tube inlet there is arranged a laval nozzle (7') with a jet pump (12) connected to it downstream.

8. Charging air cooler according to claim 7, characterised in that the branch passage (8') is arranged on that side of the inlet connection (2') on which lies the closing edge (29) of the high pressure air outlet channel (28) of a gas-dynamic pressure wave machine.

Fig. 1

Fig.2

0 168 567